# EUROPEAN PATENT APPLICATION

(11) **EP 3 001 656 A1**
(43) Date of publication of application: **30.03.2016**
(21) Application number: 15186308.1
(22) Date of filing: 22.09.2015
(51) Int. Cl.: H04M 1/725, H04M 1/67

(54) **METHOD AND APPARATUS FOR PROVIDING FUNCTION BY USING SCHEDULE INFORMATION IN ELECTRONIC DEVICE**

(30) Priority: 23.09.2014 KR 20140127115
(71) Applicant: Samsung Electronics Co., Ltd., Gyeonggi-do 16677 (KR)
(72) Inventor: Lee, Hyelim, 16677 Suwon-si (KR); Cho, Jeongsik, 16677 Suwon-si (KR); Jang, Dongho, 16677 Suwon-si (KR)
(74) Representative: Nederlandsch Octrooibureau

(57) **Abstract**

An apparatus includes a communication interface to perform a function for a communication connection with another electronic device and to receive schedule information generated by the other electronic device; an input unit to receive a user input; a memory to store at least one of the received schedule information and the generated schedule information; a display to display the at least one of the received schedule information and the generated schedule information; and a processor, wherein the processor controls the other components, determines whether the received schedule information includes contents that indicate a potential interruption of the schedule of the user of the electronic device, determines contents of the received schedule information when a communication connection request is sent to the other electronic device, and displays the received contents as a notification when the contents indicate a potential interruption of the schedule of the user of the electronic device.

## Description

### TECHNICAL FIELD

The present disclosure relates to a method and an apparatus providing various functions and a user interface to a user by using not only schedule information, which has been generated by an electronic device and is stored therein, but also schedule information received from another electronic device.

### BACKGROUND

Recently, with the progress of the digital technology, electronic devices, such as a mobile communication terminal, a Personal Digital Assistant (PDA), an electronic organizer, a smart phone, a tablet Personal Computer (PC), and the like, which can perform communication and can process personal information while moving, are being variously released. Such electronic devices do not remain in their respective traditional unique areas, but are reaching a mobile convergence phase covering the areas of other terminals. Representatively, the electronic device can have various functions, including call functions such as a voice call, a video call, etc., message transmission/reception functions such as a Short Message Service (SMS), a Multimedia Messaging Service (MMS), an email, etc., an electronic organizer function, an image-capturing function, a broadcast reproduction function, a moving image reproduction function, a music reproduction function, an Internet function, a messenger function, a Social Network Service (SNS) function, and the like.

### SUMMARY

Since functions provided based on schedule information of another person do not exist, a situation occurs in which interrupting an important schedule of another person by making a telephone call or transmitting a message during the important schedule of the other person.

To address the above-discussed deficiencies, it is a primary object to provide various functions and a user interface to a user by using not only schedule information, which has been generated by an electronic device and is stored therein, but also schedule information received from another electronic device.

Certain embodiments of the present disclosure include a method for providing a function by using schedule information in an electronic device. The method may include receiving schedule information generated by another electronic device, and storing the received schedule information in a memory; determining whether the received schedule information includes contents, which indicate a potential interruption of the schedule of the user of the electronic device, through a processor, and storing the contents; determining contents of the received schedule information when a communication connection request is sent to the other electronic device; and displaying the contents of the received schedule information as a notification on a display when the received schedule information includes the contents which indicate a potential interruption of the schedule of the user of the electronic device.

Certain embodiments of the present disclosure include an apparatus for providing a function by using schedule information in an electronic device. The apparatus may include a communication interface; an input unit; a memory; a display; and a processor, wherein the processor controls the communication interface to perform a function for a communication connection with another electronic device, controls the communication interface to receive schedule information generated by the other electronic device, controls the input unit to receive a user input, controls the memory to store at least one of the received schedule information and the generated schedule information, controls the display to display the at least one of the received schedule information and the generated schedule information, determines whether the received schedule information includes contents which indicate a potential interruption of the schedule of the user of the electronic device, determines contents of the received schedule information when a communication connection request is sent to the other electronic device, and controls the display to display the contents of the received schedule information as a notification when the received schedule information includes the contents which indicate a potential interruption of the schedule of the user of the electronic device.

The method and the apparatus for providing a function by using schedule information in the electronic device, according to various embodiments of the present disclosure, can prevent an unnecessary function operation of the electronic device on the basis of information on a schedule of another person.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1A illustrates electronic devices in a network environment according to various embodiments of the present disclosure;
FIG. 1B illustrates a configuration of an electronic device according to various embodiments of the present disclosure;
FIG. 1C illustrates a configuration of a program module according to various embodiments of the present disclosure;
FIG. 2 illustrates a method for sharing schedule information between different electronic devices and a method for providing a function by using schedule information in an electronic device according to an embodiment of the present disclosure;
FIG. 3 illustrates a method for sharing schedule information between different electronic devices and a method for providing a function by using schedule information in an electronic device according to an embodiment of the present disclosure;
FIG. 4 illustrates a user interface of an electronic device, which has received schedule information from another electronic device, according to an embodiment of the present disclosure;
FIG. 5 illustrates a user interface of a scheduled origination registration function of an electronic device according to an embodiment of the present disclosure; and
FIG. 6 illustrates a user interface of an electronic device in a case where a communication connection request is made by another electronic device during an interruption-embarrassing schedule according to an embodiment of the present disclosure.

### DETAILED DESCRIPTION

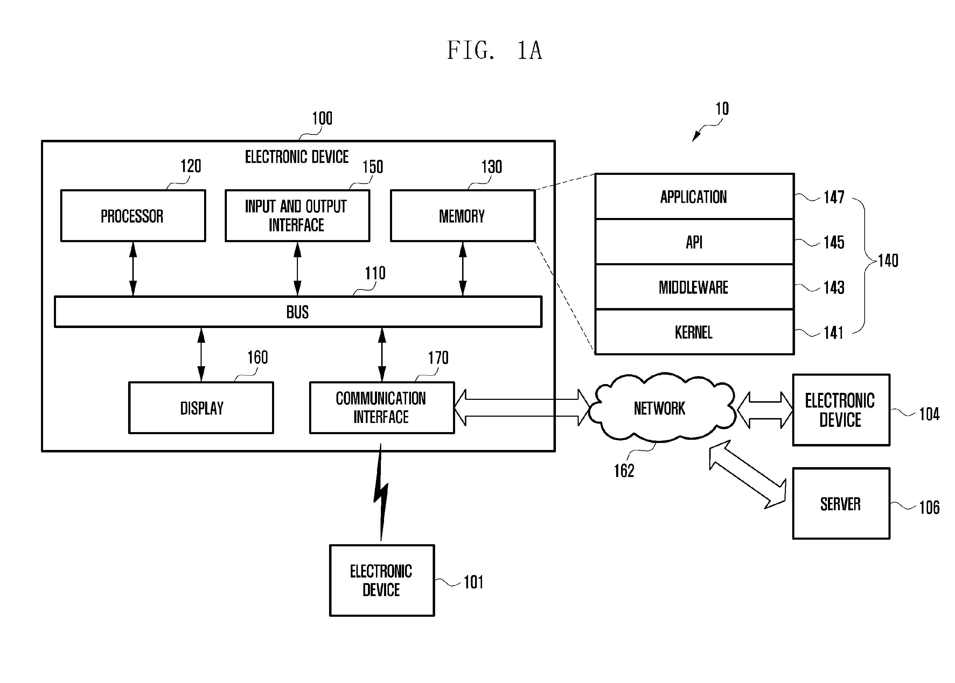

FIGURES 1A through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device. Hereinafter, the present disclosure will be described with reference to the accompanying drawings. Although specific embodiments are illustrated in the drawings and related detailed descriptions are discussed in the present specification, the present disclosure may have various modifications and several embodiments. However, various embodiments of the present disclosure are not limited to a specific implementation form and it should be understood that the present disclosure includes all changes and/or equivalents and substitutes included in the scope of various embodiments of the present disclosure. In connection with descriptions of the drawings, similar components are designated by the same reference numeral.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a communication function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a camera, a wearable device (for example, a Head-Mounted-Device (HMD) such as electronic glasses, electronic clothes, and electronic bracelet, an electronic necklace, an electronic accessory, an electronic tattoo, and a smart watch.

According to some embodiments, the electronic device may be a smart home appliance having a communication function. The smart home appliance may include at least one of a TeleVision (TV), a Digital Video Disk (DVD) player, an audio player, an air conditioner, a cleaner, an oven, a microwave oven, a washing machine, an air cleaner, a set-top box, a TV box (for example, Samsung HomeSync^{™}, Apple TV^{™}, or Google TV^{™}), game consoles, an electronic dictionary, an electronic key, a camcorder, and an electronic frame.

According to some embodiments, the electronic device may include at least one of various types of medical devices (for example, Magnetic Resonance Angiography (MRA), Magnetic Resonance Imaging (MRI), Computed Tomography (CT), a scanner, an ultrasonic device and the like), a navigation device, a Global Positioning System (GPS) receiver, an Event Data Recorder (EDR), a Flight Data Recorder (FDR), a vehicle infotainment device, electronic equipment for a ship (for example, a navigation device for ship, a gyro compass and the like), avionics, a security device, a head unit for a vehicle, an industrial or home robot, an Automatic Teller Machine (ATM) of financial institutions, and a Point Of Sale (POS) device of shops.

According to some embodiments, the electronic device may include at least one of furniture or a part of a building/structure, an electronic board, an electronic signature receiving device, a projector, and various types of measuring devices (for example, a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (for example, an artificial intelligence electronic device) which uses an electronic device.

According to certain embodiments of the present disclosure, a screen of an electronic device may be split into at least two windows according to a predefined split manner and displayed through a display of an electronic device. The windows are defined as split windows. According to certain embodiments, the split windows are defined as windows displayed on a display of an electronic display not to be superposed one on another.

According to certain embodiments, a popup window is defined as a window displayed on a display of an electronic device to hide or to be superposed on a portion of a screen under execution.

According to certain embodiments of the present disclosure, an electronic device using split windows and a popup window is capable of displaying two or more application execution screens or function execution screens. Thus, the split windows and the popup window are defined as a multi-window.

Hereinafter, an electronic device according to various embodiments will be described with reference to the accompanying drawings. As used herein, the term "user" may indicate a person who uses an electronic device or a device (e.g., an artificial intelligence electronic device) that uses an electronic device. FIG. 1A illustrates a network environment 10 including an electronic device 100 according to various embodiments of the present disclosure. Referring to FIG.1A, the electronic device 100 includes a bus 110, a processor 120, a memory 130, a user input module 150, a display module 160 and a communication module 170. The bus 110 may be a circuit connecting the above described components and transmitting communication (for example, a control message) between the above described components.

The processor 120 receives commands from other components (for example, the memory 130, the user input module 150, the display module 160, the communication module 170) through the bus 110, analyzes the received commands, and executes calculation or data processing according to the analyzed commands.

The electronic device 100 may include an application 147 capable of generating and managing schedule information. The application 147 capable of generating and managing schedule information may include at least one of, for example, a memo application, a calendar application, an email application, and a contact application.

The electronic device 100 may aquire a schedule information from the respective application, for example, the memo application, the calendar application, the email application, and the contact application. The electronic device 100 may share the aquired schedule information to each application.

The schedule information may include information regarding the contents of the schedule, time points at which elements of the schedule happens, and a main agent of the schedule.

The electronic device 100 according to certain embodiments of the present disclosure receives a user input through the input/output interface 150, and generates schedule information by processing the received user input through the processor 120.

The electronic device 100 may store the schedule information in the memory 130. When storing the generated schedule information in the memory 130, the processor 120 may classify the schedule information into the contents of the schedule, time points at which elements of the schedule happens, and a main agent of the schedule, and may control to store the contents of the schedule, the time points at which the elements of the schedule happens, and the main agent of the schedule.

The processor 120 may determine, through a semantic algorithm, whether the contents included in the received schedule information are contents which may indicate an interruption of the schedule of the user of the electronic device 100, i.e., such contents indicate moments in time where the user of the electronic device 100 has registered an event in his/her schedule such that attempts to contact that user, e.g. via a telephone call, may not be successful. In another embodiment of the present disclosure, the processor 120 may determine, through a user input, whether the contents included in the received schedule information are contents which may indicate an interruption of the schedule of the user of the electronic device 100. Again, such contents indicate moments in time where the user of the electronic device 100 has registered an event in his/her schedule such that attempts to contact that user, e.g. via a telephone call, may not be successful.

In another embodiment of the present disclosure, the processor 120 may compare the received schedule information with a schedule interruption-embarrassing word pre-stored in the memory 130, and may determine whether the contents included in the received schedule information are contents which may indicate an interruption of the schedule of the user of the electronic device 100. Again, such contents indicate moments in time where the user of the electronic device 100 has registered an event in his/her schedule such that attempts to contact that user, e.g. via a telephone call, may not be successful.

The memory 130 stores commands or data received from the processor 120 or other components (for example, the user input module 150, the display module 160, or the communication module 170) or generated by the processor 120 or other components. The memory 130 may include programming modules 140, for example, a kernel 141, middleware 143, an Application Programming Interface (API) 145, and an application 147. Each of the aforementioned programming modules may be implemented by software, firmware, hardware, or a combination of two or more thereof. In certain embodiments of the present disclosure, the memory 130 may store the schedule information generated by an application for creating and managing schedule information.

The semantic algorithm may deduce whether the contents of schedule interrupt the schedule of the user. The semantic algorithm may deduce whether to share the contents of schedule with another electronic device.The kernel 141 controls or manages system resources (for example, the bus 110, the processor 120, or the memory 130) used for executing an operation or function implemented by the remaining other programming modules, for example, the middleware 143, the API 145, or the application 147. Further, the kernel 141 provides an interface for accessing individual components of the electronic device 100 from the middleware 143, the API 145, or the application 147 to control or manage the components.

The middleware 143 performs a relay function of allowing the API 145 or the application 147 to communicate with the kernel 141 to exchange data. Further, in operation requests received from the application 147, the middleware 143 performs a control for the operation requests (for example, scheduling or load balancing) by using a method of assigning a priority, by which system resources (for example, the bus 110, the processor 120, the memory 130 and the like) of the electronic device 100 can be used, to the application 147.

The API 145 is an interface by which the application 147 can control a function provided by the kernel 141 or the middleware 143 and includes, for example, at least one interface or function (for example, command) for a file control, a window control, image processing, or a character control.

The user input module 150 can receive, for example, a command and/or data from a user, and transfer the received command and/or data to the processor 120 and/or the memory 130 through the bus 110. The display module 160 can display an image, a video, and/or data to a user.

The communication module 170 connects communication between the electronic device 100 and the external device (for example, electronic device 101, 104 or server 106). For example, the communication interface 170 may access a network 162 through wireless or wired communication to communicate with the external device. The wireless communication includes at least one of, for example, WiFi, BlueTooth (BT), Near Field Communication (NFC), a Global Positioning System (GPS), and cellular communication (for example, LTE, LTE-A, CDMA, WCDMA, UMTS, WiBro or GSM). The wired communication may include at least one of, for example, a Universal Serial Bus (USB), a High Definition Multimedia Interface (HDMI), Recommended Standard 232 (RS-232), and a Plain Old Telephone Service (POTS).

According to certain embodiments, the server 106 supports driving of the electronic device 100 by performing at least one operation (or function) implemented by the electronic device 100. For example, the server 106 may include a communication control server module that supports the communication module 170 implemented in the electronic device 100. For example, the communication control server module may include at least one of the components of the communication module 170 to perform (on behalf of) at least one operation performed by the communication module 170.

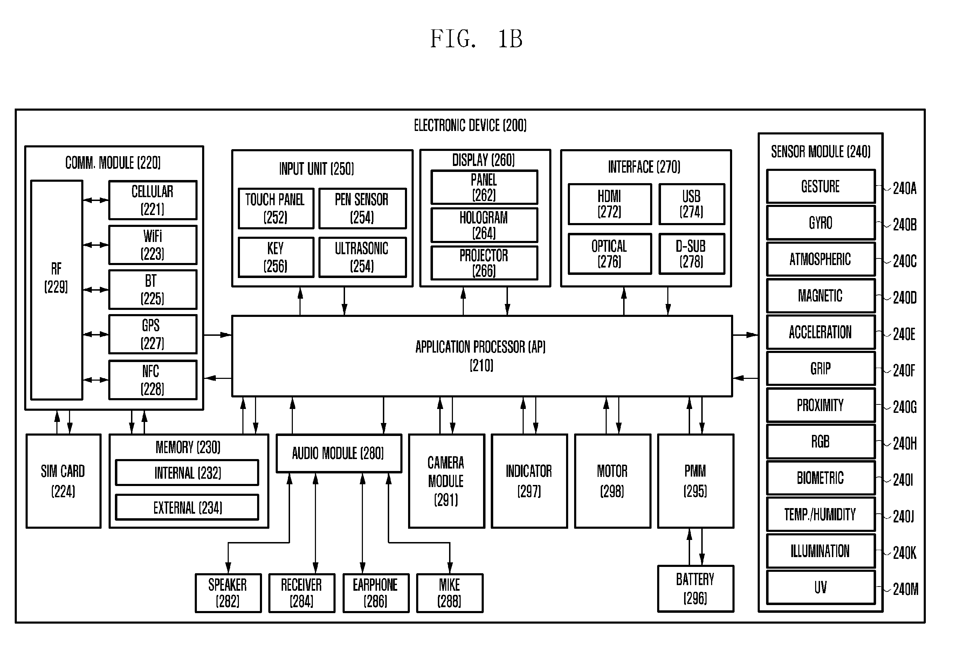

FIG. 1B illustrates block diagram 200 of an electronic device 200 according to various embodiments of the present disclosure. The electronic device 200 may configure, for example, a whole or a part of the electronic device 100 illustrated in FIG.1A. Referring to FIG.1B, the electronic device 200 includes one or more Application Processors (APs) 210, a communication module 220, a Subscriber Identification Module (SIM) card 224, a memory 230, a sensor module 240, an input device 250, a display 260, an interface 270, an audio module 280, a camera module 291, a power managing module 295, a battery 296, an indicator 297, and a motor 298.

The AP 210 operates an operating system (OS) or an application program so as to control a plurality of hardware or software component elements connected to the AP 210 and execute various data processing and calculations including multimedia data. The AP 210 may be implemented by, for example, a System on Chip (SoC). According to certain embodiments, the processor 210 may further include a Graphic Processing Unit (GPU).

The communication module 220 (for example, communication module 170) transmits/receives data in communication between different electronic devices (for example, the electronic device 104 and the server 106) connected to the electronic device 200 (for example, electronic device 100) through a network. According to certain embodiments, the communication module 220 includes a cellular module 221, a WiFi module 223, a BT module 225, a GPS module 227, a NFC module 228, and a Radio Frequency (RF) module 229.

The cellular module 221 provides a voice, a call, a video call, a Short Message Service (SMS), or an Internet service through a communication network (for example, Long Term Evolution (LTE), LTE-A, Code Division Multiple Access (CDMA), Wideband CDMA (WCDMA), UMTS, WiBro, GSM or the like). Further, the cellular module 221 may distinguish and authenticate electronic devices within a communication network by using a subscriber identification module (for example, the SIM card 224). According to certain embodiments, the cellular module 221 performs at least some of the functions which can be provided by the AP 210. For example, the cellular module 221 may perform at least some of the multimedia control functions.

According to certain embodiments, the cellular module 221 may include a Communication Processor (CP). Further, the cellular module 221 may be implemented by, for example, a SoC.

According to certain embodiments, the AP 210 or the cellular module 221 (for example, communication processor) may load a command or data received from at least one of a non-volatile memory and other components connected to each of the AP 210 and the cellular module 221 to a volatile memory and process the loaded command or data. Further, the AP 210 or the cellular module 221 may store data received from at least one of other components or generated by at least one of other components in a non-volatile memory.

Each of the WiFi module 223, the BT module 225, the GPS module 227, and the NFC module 228 may include, for example, a processor for processing data transmitted/received through the corresponding module. Although the cellular module 221, the WiFi module 223, the BT module 225, the GPS module 227, and the NFC module 228 are illustrated as blocks separate from each other in FIG. 1B, at least some (for example, two or more) of the cellular module 221, the WiFi module 223, the BT module 225, the GPS module 227, and the NFC module 228 may be included in one Integrated Chip (IC) or one IC package according to certain embodiments. For example, at least some (for example, the communication processor corresponding to the cellular module 221 and the WiFi processor corresponding to the WiFi module 223) of the processors corresponding to the cellular module 221, the WiFi module 223, the BT module 225, the GPS module 227, and the NFC module 228 may be implemented by one SoC.

The RF module 229 transmits/receives data, for example, an RF signal. Although not illustrated, the RF module 229 may include, for example, a transceiver, a Power Amp Module (PAM), a frequency filter, a Low Noise Amplifier (LNA) or the like. Further, the RF module 229 may further include a component for transmitting/receiving electronic waves over a free air space in wireless communication, for example, a conductor, a conducting wire, or the like. Although the cellular module 221, the WiFi module 223, the BT module 225, the GPS module 227, and the NFC module 228 share one RF module 229 in FIG. 1B, at least one of the cellular module 221, the WiFi module 223, the BT module 225, the GPS module 227, and the NFC module 228 may transmit/receive an RF signal through a separate RF module according to certain embodiments.

The SIM card 224 is a card including a Subscriber Identification Module and may be inserted into a slot formed in a particular portion of the electronic device. The SIM card 224 includes unique identification information (for example, Integrated Circuit Card IDentifier (ICCID)) or subscriber information (for example, International Mobile Subscriber Identity (IMSI)).

The memory 230 (for example, memory 130) may include an internal memory 232 or an external memory 234. The internal memory 232 may include, for example, at least one of a volatile memory (for example, a Random Access Memory (RAM), a dynamic RAM (DRAM), a static RAM (SRAM), a synchronous dynamic RAM (SDRAM), and the like), and a non-volatile Memory (for example, a Read Only Memory (ROM), a one-time programmable ROM (OTPROM), a programmable ROM (PROM), an erasable and programmable ROM (EPROM), an electrically erasable and programmable ROM (EEPROM), a mask ROM, a flash ROM, a NAND flash memory, an NOR flash memory, and the like).

According to certain embodiments, the internal memory 232 may be a Solid State Drive (SSD). The external memory 234 may further include a flash drive, for example, a Compact Flash (CF), a Secure Digital (SD), a Micro Secure Digital (Micro-SD), a Mini Secure Digital (Mini-SD), an extreme Digital (xD), or a memory stick. The external memory 234 may be functionally connected to the electronic device 200 through various interfaces. According to certain embodiments, the electronic device 200 may further include a storage device (or storage medium) such as a hard drive.

The sensor module 240 measures a physical quantity or detects an operation state of the electronic device 200, and converts the measured or detected information to an electronic signal. The sensor module 240 may include, for example, at least one of a gesture sensor 240A, a gyro sensor 240B, an atmospheric pressure (barometric) sensor 240C, a magnetic sensor 240D, an acceleration sensor 240E, a grip sensor 240F, a proximity sensor 240G, a color sensor 240H (for example, Red, Green, and Blue (RGB) sensor), a biometric sensor 240I, a temperature/humidity sensor 240J, an illumination (light) sensor 240K, and a Ultra Violet (UV) sensor 240M. Additionally or alternatively, the sensor module 240 may include, for example, a E-nose sensor, an electromyography (EMG) sensor, an electroencephalogram (EEG) sensor, an electrocardiogram (ECG) sensor, an InfraRed (IR) sensor, an iris sensor, a fingerprint sensor (not illustrated), and the like. The sensor module 240 may further include a control circuit for controlling one or more sensors included in the sensor module 240.

The input device 250 includes a touch panel 252, a (digital) pen sensor 254, a key 256, and an ultrasonic input device 258. For example, the touch panel 252 may recognize a touch input in at least one type of a capacitive type, a resistive type, an infrared type, and an acoustic wave type. The touch panel 252 may further include a control circuit. In the capacitive type, the touch panel 252 can recognize proximity as well as a direct touch. The touch panel 252 may further include a tactile layer. In this event, the touch panel 252 provides a tactile reaction to the user.

The (digital) pen sensor 254 may be implemented, for example, using a method identical or similar to a method of receiving a touch input of the user, or using a separate recognition sheet. The key 256 may include, for example, a physical button, an optical key, or a key pad. The ultrasonic input device 258 is a device which can detect an acoustic wave by a microphone (for example, microphone 288) of the electronic device 200 through an input means generating an ultrasonic signal to identify data and can perform wireless recognition. According to certain embodiments, the electronic device 200 receives a user input from an external device (for example, computer or server) connected to the electronic device 200 by using the communication module 220.

The display 260 (for example, display module 160) includes a panel 262, a hologram device 264, and a projector 266. The panel 262 may be, for example, a Liquid Crystal Display (LCD) or an Active Matrix Organic Light Emitting Diode (AM-OLED). The panel 262 may be implemented to be, for example, flexible, transparent, or wearable. The panel 262 may be configured by the touch panel 252 and one module. The hologram device 264 shows a stereoscopic image in the air by using interference of light. The projector 266 projects light on a screen to display an image. For example, the screen may be located inside or outside the electronic device 200. According to certain embodiments, the display 260 may further include a control circuit for controlling the panel 262, the hologram device 264, and the projector 266.

The interface 270 includes, for example, a High-Definition Multimedia Interface (HDMI) 272, a Universal Serial Bus (USB) 274, an optical interface 276, and a D-subminiature (D-sub) 278. The interface 270 may be included in, for example, the communication module 170 illustrated in FIG.1A. Additionally or alternatively, the interface 270 may include, for example, a Mobile High-definition Link (MHL) interface, a Secure Digital (SD) card/Multi-Media Card (MMC), or an Infrared Data Association (IrDA) standard interface.

The audio module 280 bi-directionally converts a sound and an electronic signal. At least some components of the audio module 280 may be included in, for example, the user input module 150 illustrated in FIG.1A. The audio module 280 processes sound information input or output through, for example, a speaker 282, a receiver 284, an earphone 286, the microphone 288 or the like.

The camera module 291 is a device which can photograph a still image and a video. According to certain embodiments, the camera module 291 may include one or more image sensors (for example, a front sensor or a back sensor), an Image Signal Processor (ISP) (not shown) or a flash (for example, an LED or xenon lamp).

The power managing module 295 manages power of the electronic device 200. Although not illustrated, the power managing module 295 may include, for example, a Power Management Integrated Circuit (PMIC), a charger Integrated Circuit (IC), or a battery or fuel gauge.

The PMIC may be mounted to, for example, an integrated circuit or a SoC semiconductor. A charging method may be divided into wired and wireless methods. The charger IC charges a battery and prevent over voltage or over current from flowing from a charger. According to certain embodiments, the charger IC includes a charger IC for at least one of the wired charging method and the wireless charging method. The wireless charging method may include, for example, a magnetic resonance method, a magnetic induction method and an electromagnetic wave method, and additional circuits for wireless charging, for example, circuits such as a coil loop, a resonant circuit, a rectifier or the like may be added.

The battery fuel gauge measures, for example, a remaining quantity of the battery 296, or a voltage, a current, or a temperature during charging. The battery 296 may store or generate electricity and supply power to the electronic device 200 by using the stored or generated electricity. The battery 296 may include a rechargeable battery or a solar battery.

The indicator 297 shows particular statuses of the electronic device 200 or a part (for example, AP 210) of the electronic device 200, for example, a booting status, a message status, a charging status and the like. The motor 298 converts an electrical signal to a mechanical vibration.

Although not illustrated, the electronic device 200 may include a processing unit (for example, GPU) for supporting a module TV. The processing unit for supporting the mobile TV may process, for example, media data according to a standard of Digital Multimedia Broadcasting (DMB), Digital Video Broadcasting (DVB), media flow or the like. Each of the components of the electronic device according to various embodiments of the present disclosure may be implemented by one or more components and the name of the corresponding component may vary depending on a type of the electronic device. The electronic device according to various embodiments of the present disclosure may include at least one of the above described components, a few of the components may be omitted, or additional components may be further included. Also, some of the components of the electronic device according to various embodiments of the present disclosure may be combined to form a single entity, and thus may equivalently execute functions of the corresponding components before being combined.

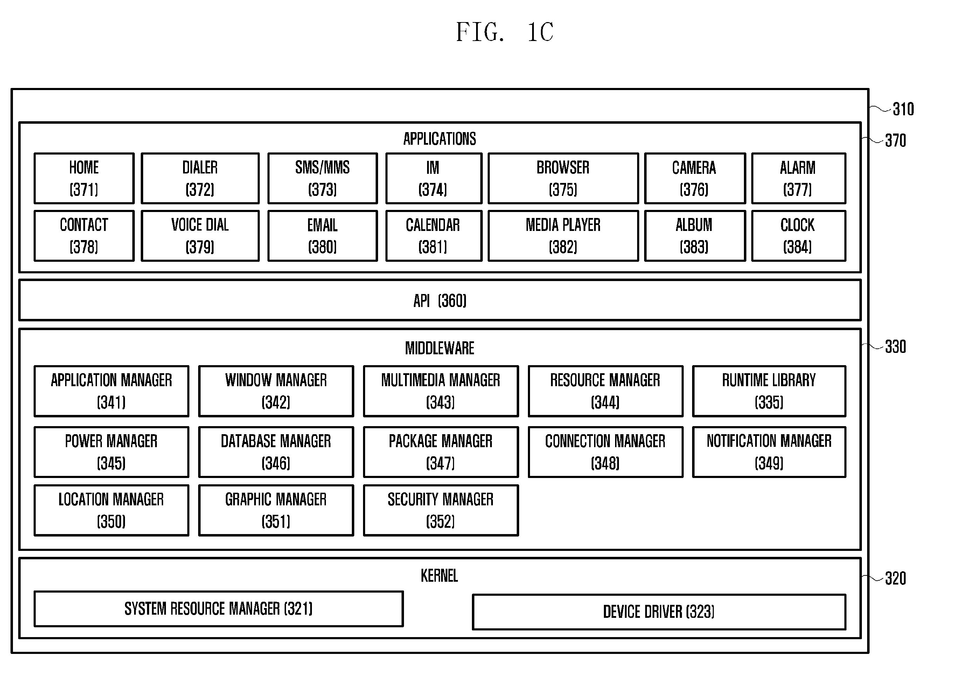

FIG. 1C illustrates a block diagram of a programming module 310 according to embodiments of the present disclosure. The programming module 310 (for example, programming module 140) may be included (stored) in the electronic device 100 (for example, memory 130) illustrated in FIG. 1A. At least some of the programming module 310 may be formed of software, firmware, hardware, or a combination of at least two of software, firmware, and hardware. The programming module 310 may be executed in the hardware (for example, electronic device 200) to include an Operating System (OS) controlling resources related to the electronic device (for example, electronic device 100) or various applications (for example, applications 370) driving on the OS. For example, the OS may be Android, iOS, Windows, Symbian, Tizen, Bada or the like. Referring to FIG. 1C, the programming module 310 includes a kernel 320, a middleware 330, an Application Programming Interface (API) 360, and applications 370.

The kernel 320 (for example, kernel 141) includes a system resource manager 321 and a device driver 323. The system resource manager 321 may include, for example, a process manager, a memory manager, and a file system manager. The system resource manager 321 performs a system resource control, allocation, and recall. The device driver 323 may include, for example, a display driver, a camera driver, a Bluetooth driver, a shared memory driver, a USB driver, a keypad driver, a WiFi driver, and an audio driver. Further, according to certain embodiments, the device driver 323 may include an Inter-Process Communication (IPC) driver. The middleware 330 includes a plurality of modules prepared in advance to provide a function required in common by the applications 370. Further, the middleware 330 provides a function through the API 360 to allow the application 370 to efficiently use limited system resources within the electronic device. For example, as illustrated in FIG. 1C, the middleware 330 (for example, middleware 143) includes at least one of a runtime library 335, an application manager 341, a window manager 342, a multimedia manager 343, a resource manager 344, a power manager 345, a database manager 346, a package manager 347, a connection manager 348, a notification manager 349, a location manager 350, a graphic manager 351, and a security manager 352.

The runtime library 335 includes, for example, a library module used by a complier to add a new function through a programming language while the application 370 is executed. According to certain embodiments, the runtime library 335 executes input and output, management of a memory, a function associated with an arithmetic function and the like.

The application manager 341 manages, for example, a life cycle of at least one of the applications 370. The window manager 342 manages GUI resources used on the screen. The multimedia manager 343 detects a format required for reproducing various media files and performs an encoding or a decoding of a media file by using a codec suitable for the corresponding format. The resource manager 344 manages resources such as a source code, a memory, or a storage space of at least one of the applications 370.The power manager 345 operates together with a Basic Input/Output System (BIOS) to manage a battery or power and provides power information required for the operation. The database manager 346 manages generation, search, and change of a database to be used by at least one of the applications 370. The package manager 347 manages an installation or an update of an application distributed in a form of a package file.

The connection manager 348 manages, for example, a wireless connection such as WiFi or Bluetooth. The notification manager 349 displays or notifies a user of an event such as an arrival message, an appointment, a proximity alarm or the like, in a manner that does not disturb the user. The location manager 350 manages location information of the electronic device. The graphic manager 351 manages a graphic effect provided to the user or a user interface related to the graphic effect. The security manager 352 provides a general security function required for a system security or a user authentication. According to certain embodiments, when the electronic device (for example, electronic device 100 or 200) has a call function, the middleware 330 may further include a telephony manager for managing a voice of the electronic device or a video call function.

The middleware 330 may generate a new middleware module through a combination of various functions of the aforementioned internal component modules and use the generated new middleware module. The middleware 330 may provide a module specified for each type of operating system to provide a differentiated function. Further, the middleware 330 may dynamically delete some of the old components or add new components. Accordingly, some of the components described in the embodiment of the present disclosure may be omitted, replaced with other components having different names but performing similar functions, or other components may be further included.

The API 360 (for example, API 145) is a set of API programming functions, and may be provided with a different configuration according to an operating system. For example, in Android or iOS, a single API set may be provided for each platform. In Tizen, two or more API sets may be provided.

The applications 370, which may include an application similar to the application 147, may include, for example, a preloaded application and/or a third party application. The applications 370 may include a home application 371, a dialer application 372, a Short Messaging Service (SMS)/Multlimedia Messaging Service (MMS) application 373, an Instant Messaging (IM) application 374, a browser application 375, a camera application 376, an alarm application 377, a contact application 378, a voice dial application 379, an email application 380, a calendar application 381, a media player application 382, an album application 383, and a clock application 384. However, the present embodiment is not limited thereto, and the applications 370 may include any other similar and/or suitable application.

At least a part of the programming module 310 can be implemented by commands stored in computer-readable storage media. When the commands are executed by at least one processor, e.g. the AP 210, at least one processor can perform functions corresponding to the commands. The computer-readable storage media may be, for example, the memory 230. At least a part of the programming module 310 can be implemented, e.g. executed, by, for example, the AP 210. At least a part of the programming module 310 may include, for example, a module, a program, a routine, a set of instructions and/or a process for performing at least one function.

The titles of the aforementioned elements of the programming module, e.g. the programming module 310, according to the present disclosure may vary depending on the type of the OS. The programming module according to the present disclosure may include at least one of the aforementioned elements and/or may further include other additional elements, and/or some of the aforementioned elements may be omitted. The operations performed by a programming module and/or other elements according to the present disclosure may be processed through a sequential, parallel, repetitive, and/or heuristic method, and some of the operations may be omitted and/or other operations may be added.

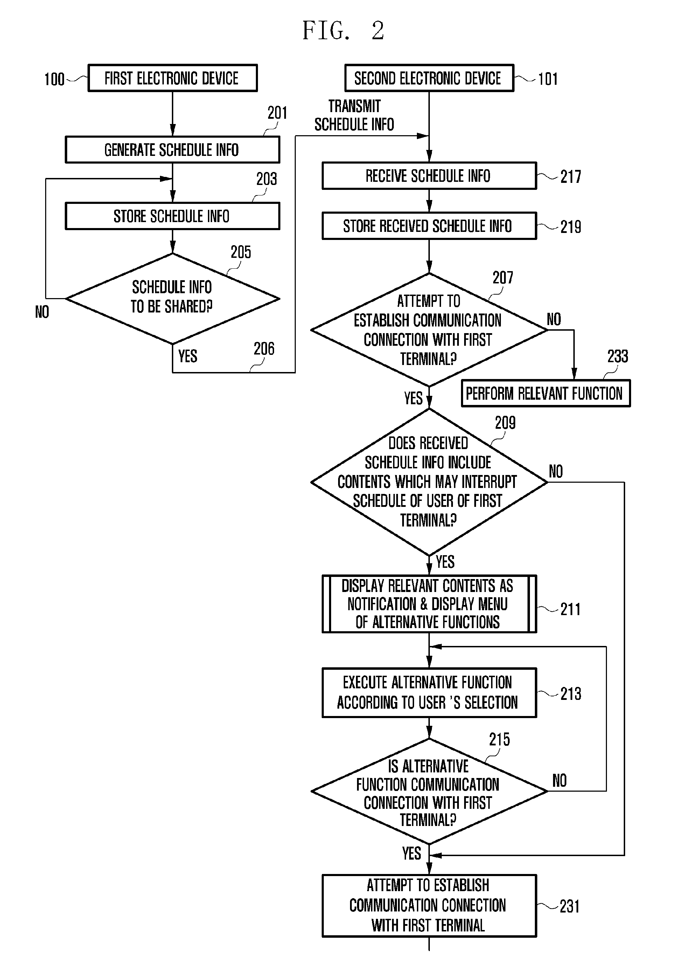

Each of a first electronic device 100 and a second electronic device 101 illustrated in FIG. 2 has functions identical to those of the electronic devices 100 and 200 illustrated in FIGS. 1A to 1C.

According to certain embodiments of the present disclosure, each of the first electronic device 100 and the second electronic device 101 may include an application capable of generating and managing schedule information. The application capable of generating and managing schedule information may include at least one of, for example, a memo application, a calendar application, an email application, and a contact application.

A memo, an email, a schedule, and/or a message, which are generated by using the memo application, the email application, the calendar application, the contact application, and/or the like, may be stored as schedule information in the memory 130.

When a user input is entered into the generated memo, the generated email, the generated schedule, or the generated message, each of the first electronic device 100 and the second electronic device 101 may manage the generated memo, email, schedule, or message, into which the user input is entered, as schedule information. For example, when a user input such as a touch swipe gesture is received by the generated memo, email, schedule, message, and/or the like, the first electronic device 100 may manage the generated memo, email, schedule, message, and/or the like, which has received the user input, as schedule information, and may provide, on the display 160, a user interface capable of editing the contents of the schedule, and time (e.g., a time picker) thereof so as to be capable of managing the generated memo, email, schedule, message, and/or the like, which has received the user input, as the schedule information.

When the user input is entered into the generated memo, the generated email, the generated schedule, or the generated message, each of the first electronic device 100 and the second electronic device 101 may provide, on the display 160, a user interface that inquires whether the generated memo, email, schedule, or message, into which the user input is entered, is stored as the schedule information, or a user interface capable of selecting the type of an application (e.g., a contact application, an email application, a calendar application, and a memo application) to be managed.

In operation 201, the first electronic device 100 according to embodiments of the present disclosure receives a user input through the input/output interface 150, and generates schedule information by processing the received user input through the processor 120.

In operation 201, the first electronic device 100 according to another embodiments of the present disclosure may receive schedule information stored outside of the first electronic device 100 through the communication interface 170.

In operation 203, the first electronic device 100 may store the schedule information in the memory 130. When storing the generated schedule information in the memory 130, the first electronic device 100 may classify the schedule information into the contents of the schedule, time points at which elements of the schedule happens, and a main agent of the schedule, and may store the contents of the schedule, the time points at which the elements of the schedule happens, and the main agent of the schedule.

In operation 205, the first electronic device 100 may determine whether the stored schedule information is a subject to be shared.

In a case where the schedule information stored in the first electronic device 100 is personal information, when the first electronic device 100 shares the stored schedule information with another electronic device, there is concern that the privacy of a user of the first electronic device 100 may be violated. Thus the first electronic device 100 may determine whether the stored schedule information is a subject to be shared, in order to transmit only schedule information that another person may learn through the other electronic device to the other electronic device.

At this time, when the first electronic device 100 determines, in operation 205, whether the stored schedule information is a subject to be shared, the first electronic device 100 may determine, through a semantic algorithm, whether the stored schedule information is a subject to be shared.

In another embodiment of the present disclosure, when the first electronic device 100 determines, in operation 205, whether the stored schedule information is a subject to be shared, the first electronic device 100 may select whether the stored schedule information is a subject to be shared, according to a user input signal. For example, when the first electronic device 100 receives a user input, which selects whether schedule information is shared, through the input/output interface 150, the first electronic device 100 may determine that the schedule information is to be shared, according to the received user input.

In operation 206, the first electronic device 100 may transmit the schedule information, which is determined as a subject to be shared, to the second electronic device 101.

In operation 206, the second electronic device 101 may receive, from the first electronic device 100, the schedule information to be shared. The schedule information to be shared, that the second electronic device 101 has received from the first electronic device 100, may be schedule information which has been generated by the first electronic device 100 and is stored therein.

In operation 217, the second electronic device 101 may receive the schedule information from the first electronic device 100 through the communication interface 170. In operation 219, the second electronic device 101 may store the received schedule information in the memory 130.

In operation 207, the second electronic device 101 may determine whether a communication connection request is sent to the first electronic device 100, which shares the schedule information with the second electronic device 101, or an attempt is made to establish a communication connection with the first electronic device 100.

When it is determined that the communication connection request is not sent to the first electronic device 100 or the attempt is not made to establish the communication connection with the first electronic device 100, the second electronic device 101 may branch to operation 233, and may perform the relevant function being performed.

In contrast, when it is determined that the communication connection request is sent to the first electronic device 100 or the attempt is made to establish the communication connection with the first electronic device 100, in operation 209, the second electronic device 101 may determine whether schedule contents, which indicate a potential interruption of the schedule of the user of the first electronic device 100, are included in the schedule information received from the first electronic device 100. Again, such contents indicate moments in time where the user of the electronic device 100 has registered an event in his/her schedule such that attempts to contact that user, e.g. via a telephone call, may not be successful.

In operation 209, the second electronic device 101 may determine whether contents, which may indicate a potential interruption of the schedule of the user of the first electronic device 100, are included in the schedule information received from the first electronic device 100. For example, the contents, which may interrupt the schedule of the user of the first electronic device 100, may be related to business, such as a meeting.

In operation 209, the second electronic device 101 may determine, through a semantic algorithm, whether the contents, which may interrupt the schedule of the user of the first electronic device 100, are included in the received schedule information. In another embodiment of the present disclosure, in operation 209, the second electronic device 101 may compare the received schedule information with a schedule interruption-embarrassing word pre-stored in the memory 130, and may determine whether the contents, which may interrupt the schedule of the user of the first electronic device 100, are included in the received schedule information.

When it is determined that the contents, which may interrupt the schedule of the user of the first electronic device 100, are included in the received schedule information, in operation 211, the second electronic device 101 may display the relevant contents as a notification on the display 160. For example, when it is determined that the contents, which may interrupt the schedule of the user of the first electronic device 100, are included in the received schedule information, the second electronic device 101 may display the relevant contents, in the form of a pop-up window on the display 160.

When it is determined that the contents, which may interrupt the schedule of the user of the first electronic device 100, are included in the received schedule information, in operation 211, the second electronic device 101 may display a menu related to an alternative function on the display 160. For example, when it is determined that the contents, which may interrupt the schedule of the user of the first electronic device 100, are included in the received schedule information, the second electronic device 101 may display a menu related to an alternative function, in the form of a pop-up window on the display 160.

For example, the alternative function may be a message transmission function, an origination cancellation function, an email transmission function, a scheduled origination registration, and a function for a communication connection with the first electronic device 100.

In the present example, when the scheduled origination registration is selected as an alternative function, if a schedule of the second electronic device 101 is completed, the second electronic device 101 may establish a communication connection with the first electronic device 100, or may notify, on the display 160, of whether the second electronic device 101 establishes a communication connection with the first electronic device 100.

When it is determined in operation 209 that the contents, which may interrupt the schedule of the user of the first electronic device 100, are not included in the schedule information, the second electronic device 101 may branch to operation 231, and may send a communication connection request to the first electronic device 100, or may attempt to establish a communication connection with the first electronic device 100.

When the alternative function is a function for a communication connection with the first electronic device 100 in operation 215, namely, in the case of a request for establishing a communication connection with the first electronic device 100 or an attempt to establish the communication connection therewith, the second electronic device 101 may branch to operation 231, and may send the communication connection request to the first electronic device 100, or may attempt to establish the communication connection with the first electronic device 100. In contrast, when the alternative function is not the function for the communication connection with the first electronic device 100 in operation 215, the second electronic device 101 may branch back to operation 213.

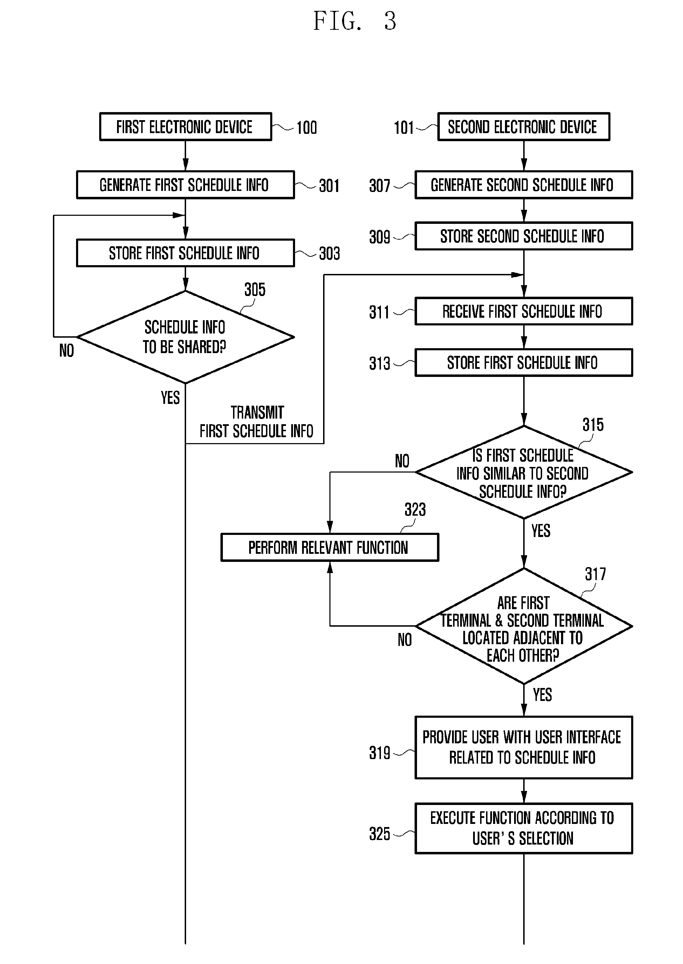

FIG. 3 illustrates a method for sharing schedule information between different electronic devices and a method for providing a function by using schedule information in the electronic device 100 according to certain embodiments of the present disclosure.

In operation 301, the first electronic device 100 according to certain embodiments of the present disclosure may receive a user input of the first electronic device 100 which is input through the input/output interface 150, and may generate first schedule information by processing the received user input through the processor 120.

In operation 301, the first electronic device 100 according to another embodiment of the present disclosure may receive schedule information, which is stored outside of the first electronic device 100, through the communication interface 170, and may generate first schedule information of the first electronic device 100, from the received schedule information.

In operation 303, the first electronic device 100 may store the first schedule information in the memory 130. When storing the first schedule information in the memory 130, the first electronic device 100 may classify the first schedule information into the contents of the schedule, time points at which elements of the schedule happens, and a main agent of the schedule, and may store the contents of the schedule, the time points at which the elements of the schedule happens, and the main agent of the schedule.

In operation 305, the first electronic device 100 may determine whether the first schedule information is a subject to be shared. When the first electronic device 100 determines in operation 305 whether the first schedule information is a subject to be shared, the first electronic device 100 may determine, through a semantic algorithm, whether the first schedule information is schedule information to be shared. In another embodiment of the present disclosure, when the first electronic device 100 determines in operation 305 whether the first schedule information is a subject to be shared, the first electronic device 100 may determine whether the first schedule information is a subject to be shared, according to a user input signal. For example, when a user input, which selects whether the first schedule information is a subject to be shared, is received through the input/output interface 150, the first electronic device 100 may determine whether the first schedule information is a subject to be shared, according to the received user input.

In operation 307, the second electronic device 101 may generate second schedule information. The second electronic device 101 may receive a user input through the input/output interface 150, and may generate second schedule information by processing the received user input through the processor 120. The second electronic device 101, according to another embodiment of the present disclosure, may receive second schedule information, which is stored outside of the second electronic device 101, through the communication interface 170.

In operation 309, the second electronic device 101 may store the generated second schedule information in the memory 130. When storing the generated second schedule information in the memory 130, the second electronic device 101 may classify the second schedule information into the contents of the schedule, time points at which elements of the schedule happens, and a main agent of the schedule, and may store the contents of the schedule, the time points at which the elements of the schedule happens, and the main agent of the schedule.

In operation 310, the first electronic device 100 may transmit the first schedule information, which has been determined as the subject to be shared, to the second electronic device 101.

In operation 311, the second electronic device 101 may receive the first schedule information through the communication interface 170. In operation 313, the second electronic device 101 may store the received first schedule information in the memory 130. When storing the received first schedule information in the memory 130, the second electronic device 101 may classify the first schedule information into the contents of the schedule, time points at which elements of the schedule happens, and a main agent of the schedule, and may store the contents of the schedule, the time points at which the elements of the schedule happens, and the main agent of the schedule.

In operation 315, the second electronic device 101 may determine whether the first schedule information, which has been received from the first electronic device 100, is similar to the second schedule information. For example, the second electronic device 101 may determine whether the first schedule information is similar to the second schedule information, with reference to the contents of the schedule, time points at which elements of the schedule happens, and a main agent of the schedule, in each of the first schedule information and the second schedule information. When determining whether the first schedule information is similar to the second schedule information, the second electronic device 101 may determine, at predetermined time intervals, whether the first schedule information is similar to the second schedule information. Alternatively, the second electronic device 101 may determine whether the first schedule information is similar to the second schedule information, when new schedule information is generated or received from the first electronic device 100 or the second electronic device 101.

When it is determined that the first schedule information is not similar to the second schedule information, the second electronic device 101 may branch to operation 323, and may perform the relevant function being performed.

When it is determined that the first schedule information is similar to the second schedule information, in operation 317, the second electronic device 101 may determine, based on location information, whether the first electronic device 100 and the second electronic device 101 are located adjacent to each other. Each of the first electronic device 100 and the second electronic device 101 may calculate a location by using the communication module 220 (e.g., the GPS module 227), and may acquire location information thereof and that of the counterpart electronic device, from the calculated location. For example, when it is determined in operation 317 that the first electronic device 100 and the second electronic device 101 are located within a determined distance, the second electronic device 101 may determine that the first electronic device 100 and the second electronic device 101 are located adjacent to each other.

When it is determined that the first electronic device 100 and the second electronic device 101 are not located adjacent to each other, the second electronic device 101 may branch to operation 323, and may perform the relevant function being performed.

When it is determined that the first electronic device 100 and the second electronic device 101 are located adjacent to each other, in operation 319, the second electronic device 101 may provide a user interface, which is related to the first schedule information or the second schedule information, to a user of the second electronic device 101. For example, the second electronic device 101 may display contents, which are related to the first schedule information or the second schedule information, on the display 160 to the user of the second electronic device 101. Alternatively, the second electronic device 101 may display a menu of functions, which are related to the first schedule information or the second schedule information, on the display 160 to the user of the second electronic device 101. For example, the menu of functions related to the first schedule information or the second schedule information may be message transmission, making a telephone call, and the like.

When it is determined that the first electronic device 100 and the second electronic device 101 are located adjacent to each other, in operation 325, the second electronic device 101 may execute function according to selection of the user. When the second electronic device 101 may display a menu of functions, the second electronic device 101 may receive an input signal corresponding to the selection by the user, and may perform the function.

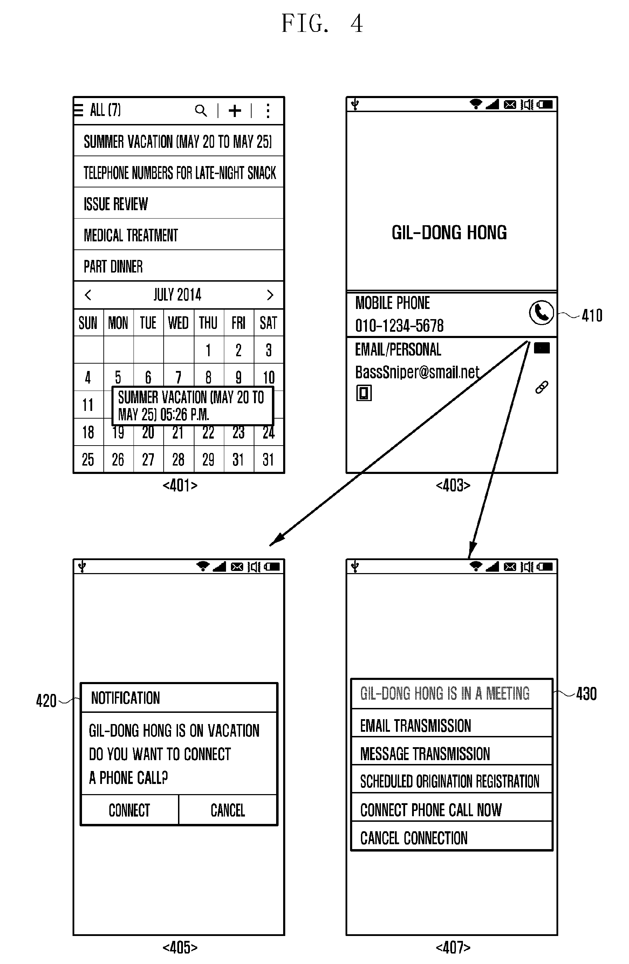

FIG. 4 illustrates a user interface of the electronic device 100, which has received schedule information from another electronic device, according to certain embodiments of the present disclosure.

As indicated by reference numeral 401, the electronic device 100 may integrally manage not only schedule information, which has been generated by the electronic device 100, but also schedule information, which has been received from another electronic device. For example, by using an application (e.g., a calendar application) related to schedule management, the electronic device 100 may manage not only schedule information of the user of the electronic device 100, such as medical treatment, which has been generated by the electronic device 100, but also schedule information of a user of another electronic device, such as summer vacation (May 20 to May 25). For example, the schedule information on summer vacation (May 20 to May 25) may be schedule information generated by Gil-Dong Hong who is the user of another electronic device.

In a case where the user of the electronic device 100 attempts to connect a telephone call with Gil-Dong Hong, who has generated the schedule information "summer vacation (May 20 to May 25)," as indicated by reference numeral 403, when the electronic device 100 determines that a time point at which the user of the electronic device 100 makes a telephone call corresponds to the schedule "summer vacation (May 20 to May 25)" of Gil-Dong Hong, the electronic device 100 may display the contents of the schedule as a notification on the display 160, as indicated by reference numeral 405.

Alternatively, when the electronic device 100 determines that the time point at which the user of the electronic device 100 makes a telephone call corresponds to the schedule "summer vacation (May 20 to May 25)" of Gil-Dong Hong, the electronic device 100 may display a function, which replaces a telephone call connection, on the display 160, as a menu, as indicated by reference numeral 407. When the user selects an alternative function displayed as a menu, the electronic device 100 may receive an input signal corresponding to the selection by the user, and may perform the alternative function. For example, the alternative function may be at least one of a message transmission function, a communication connection cancellation function, an email transmission function, a scheduled origination registration function, and a function of continuing a communication connection with another electronic device.

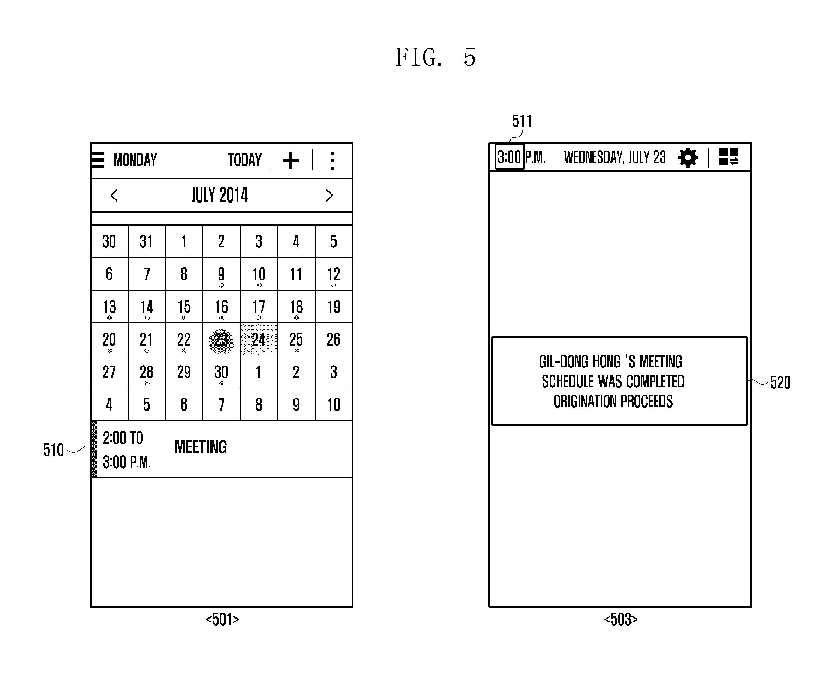

FIG. 5 illustrates a user interface of a scheduled origination registration function of the electronic device 100 according to an embodiment of the present disclosure.

As indicated by reference numeral 501, the electronic device 100 may manage a meeting schedule (2:00 to 3:00 p.m.) 510 of Gil-Dong Hong, who is the user of another electronic device, by using a calendar application. A case in which the user selects the scheduled origination registration function from among the alternative functions is described as follows. As indicated by reference numeral 503, the electronic device 100 may display a notification 520 representing the end of the schedule of Gil-Dong Hong, who is the user of another electronic device, at 3:00 p.m. which is indicated by reference numeral 511 and is an end time point of the meeting schedule of Gil-Dong Hong, and may attempt to establish a communication connection with Gil-Dong Hong.

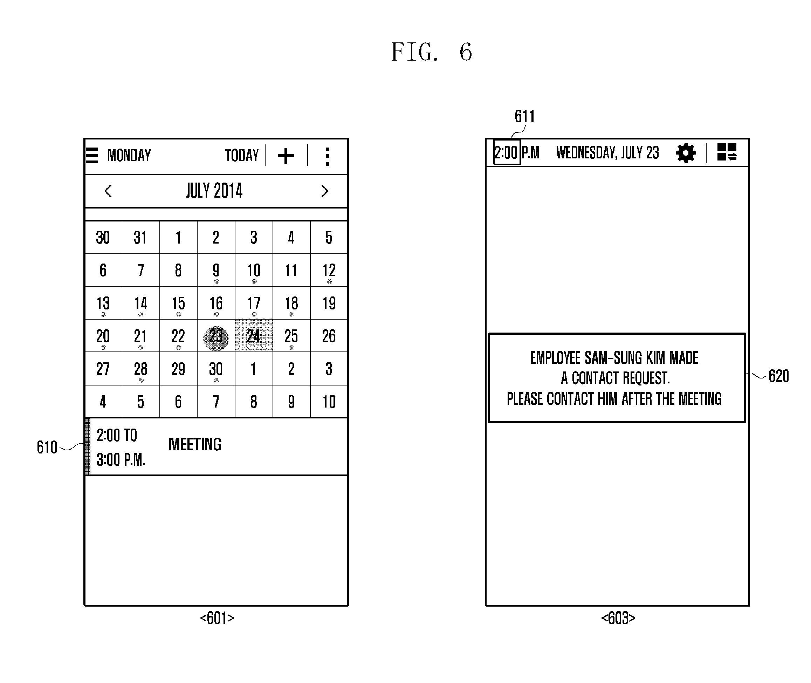

FIG. 6 illustrates a user interface of the electronic device 100 in a case where a communication connection request is made by another electronic device during an interruption-embarrassing schedule according to certain embodiments of the present disclosure.

As indicated by reference numeral 601, the electronic device 100 may manage a meeting schedule (2:00 to 3:00 p.m.) 610 of the user of the electronic device 100 by using a calendar application.

The electronic device 100 may transmit schedule information 610 thereof to another electronic device. As indicated by reference numeral 603, when a communication connection request is made by Sam-Sung Kim who is a user of another electronic device that shares the schedule information 610, the electronic device 100 may identify the schedule information.

When it is determined that the schedule information includes contents which may interrupt a schedule of the user, the electronic device 100 may display the relevant contents or the person who has made a telephone call, as a notification 620 on the display 160. The schedule, such as summer vacation or a meeting as illustrated in FIGS. 4 to 6, may be a schedule, which may indicate a potential interruption of the schedule of the user of the electronic device or during which a communication connection is determined as an interruption, while a person, who generates a schedule, performs the generated schedule.

Although the present disclosure has been described with embodiments, various changes and modifications may be suggested to one skilled in the art. It is intended that the present disclosure encompass such changes and modifications as fall within the scope of the appended claims.

## Claims

1. A method for providing a function by using schedule information in an electronic device, the method comprising:
receiving schedule information generated by another electronic device;
storing the received schedule information in a memory;
determining, by a processor in the electronic device, whether the received schedule information includes contents that indicate a potential interruption of the schedule of a user of the electronic device;
storing the contents;
determining contents of the received schedule information when a communication connection request is sent to the other electronic device; and
displaying the contents of the received schedule information as a notification on a display when the received schedule information includes the contents that indicate a potential interruption of the schedule of the user of the electronic device.

2. The method of claim 1, wherein the determining of the contents of the received schedule information when the communication connection request is sent to the other electronic device comprises at least one of:
determining, by using a semantic algorithm, whether the received schedule information includes the contents that indicate a potential interruption of the schedule of the user of the electronic device; or
determining whether the received schedule information includes the contents that indicate a potential interruption of the schedule of the user of the electronic device, by comparing the received schedule information with a pre-designated word.

3. The method of claim 2, further comprising providing an alternative function when the received schedule information includes the contents that indicate a potential interruption of the schedule of the user of the electronic device.

4. The method of claim 2, further comprising displaying a user interface related to an alternative function on the display when the received schedule information includes the contents that indicate a potential interruption of the schedule of the user of the electronic device.

5. The method of claim 3 or 4, wherein the alternative function comprises at least one of:
a message transmission function,
a communication connection cancellation function,
an email transmission function,
a scheduled origination registration function, and
a function of continuing a communication connection with the other electronic device.

6. The method of claim 2, further comprising:
generating and storing generated schedule information in response to a user input;
determining whether the generated schedule information corresponds to schedule information capable of being shared with the other electronic device; and
transmitting the generated schedule information to the other electronic device when the processor determines that the generated schedule information corresponds to the schedule information capable of being shared with the other electronic device.

7. The method of claim 6, comprising:
identifying the generated schedule information when a communication connection request is received from the other electronic device that has received the generated schedule information;
determining whether the generated schedule information includes contents that indicate a potential interruption of the schedule of the user of the electronic device; and
displaying contents of the generated schedule information as a notification on the display when the generated schedule information includes the contents that indicate a potential interruption of the schedule of the user of the electronic device.

8. The method of claim 7, further comprising providing an alternative function when the generated schedule information includes the contents that indicate a potential interruption of the schedule of the user of the electronic device.

9. The method of claim 6, further comprising:
determining whether the received schedule information is similar to the generated schedule information;
determining whether the electronic device and the other electronic device are located within a determined distance when the processor determines that the received schedule information is similar to the generated schedule information;
when the processor determines that the electronic device and the other electronic device are located within the determined distance, displaying a user interface related to at least one of:
the received schedule information or
the generated schedule information, and
when the processor determines that the electronic device and the other electronic device are located within the determined distance, providing a function related to the at least one of:
the received schedule information or
the generated schedule information.

10. An apparatus for providing a function by using schedule information in an electronic device, the apparatus comprising:
a communication interface;
an input unit;
a memory;
a display; and
a processor,
wherein the processor is configured to:
control the communication interface to perform a function for a communication connection with another electronic device,
control the communication interface to receive schedule information generated by the other electronic device,
control the input unit to receive a user input,
control the memory to store at least one of the received schedule information and the generated schedule information,
control the display to display the at least one of the received schedule information and the generated schedule information,
determine whether the received schedule information includes contents that indicate a potential interruption of the schedule of a user of the electronic device,
determine contents of the received schedule information when a communication connection request is sent to the other electronic device, and
control the display to display the contents of the received schedule information as a notification when the received schedule information includes the contents that indicate a potential interruption of the schedule of the user of the electronic device.

11. The apparatus of claim 10, wherein the processor is further configured to at least one of:
determine, by using a semantic algorithm, whether the received schedule information includes the contents that indicate a potential interruption of the schedule of the user of the electronic device, or
determine whether the received schedule information includes the contents that indicate a potential interruption of the schedule of the user of the electronic device, by comparing the received schedule information with a pre-designated word.

12. The apparatus of claim 11, wherein the processor is further configured to perform a control operation for providing an alternative function and displaying a user interface related to the alternative function on the display, when the received schedule information includes the contents that indicate a potential interruption of the schedule of the user of the electronic device.

13. The apparatus of claim 12, wherein the alternative function comprises at least one of:
a message transmission function,
a communication connection cancellation function,
an email transmission function,
a scheduled origination registration function, and
a function of continuing a communication connection with the other electronic device.

14. The apparatus of claim 11, wherein the processor is further configured to:
determine whether the generated schedule information corresponds to schedule information capable of being shared with the other electronic device,
control the communication interface to transmit the generated schedule information to the other electronic device when the processor determines that the generated schedule information corresponds to the schedule information capable of being shared with the other electronic device,
identify the generated schedule information when a communication connection request is made by and received from the other electronic device that has received the generated schedule information,
determine whether the generated schedule information includes contents that cause a communication connection to be difficult to establish,
control the display to display contents of the generated schedule information as a notification when the generated schedule information includes the contents that indicate a potential interruption of the schedule of the user of the electronic device, and
provide an alternative function when the generated schedule information includes the contents that indicate a potential interruption of the schedule of the user of the electronic device.

15. The apparatus of claim 14, wherein the processor is further configured to:
determine whether the received schedule information is similar to the generated schedule information,
determine whether the electronic device and the other electronic device are located within a determined distance when the processor determines that the received schedule information is similar to the generated schedule information,
when the process determines that the electronic device and the other electronic device are located within the determined distance, control the display to display a user interface related to at least one of:
the schedule information of the other electronic device or
the generated schedule information, and
when it is determined that the electronic device and the other electronic device are located within the determined distance, provide a function related to the at least one of:
the received schedule information or
the generated schedule information.
